# EUROPEAN PATENT APPLICATION

(11) **EP 4 792 963 A1**
(43) Date of publication of application: **19.08.2026**
(21) Application number: 25208768.9
(22) Date of filing: 15.10.2025
(51) Int. Cl.: B23D 31/00, B21D 24/16, B21D 51/26, B23D 23/00, B23D 23/04, H01M 50/103, H01M 50/15

(54) **APPARATUS AND METHOD FOR CUTTING A SECONDARY BATTERY CAN**

(30) Priority: 17.02.2025 KR 20250020384
(71) Applicant: SAMSUNG SDI CO., LTD., Yongin-si, Gyeonggi-do 17084 (KR)
(72) Inventor: Jang, Youngjin, Yongin-si, Gyeonggi-do 17084 (KR); Choi, JungHun, Yongin-si, Gyeonggi-do 17084 (KR)
(74) Representative: Meissner Bolte Partnerschaft mbB

(57) **Abstract**

An apparatus for cutting a secondary battery can includes a support fixedly supporting a molded battery can product having a removal target portion, a cutter having an incision blade inserted into the molded battery can product, the cutter being configured to incise a portion of the removal target portion, and a cutting blade configured to continuously cut from the portion of the removal target portion incised by the incision blade, and a cutter driver that moves the cutter and causes the incision blade to move along a linear path perpendicular to an inner wall of the molded battery can product, resulting in a cutting start incision portion on the inner wall, the cutter driver causing the cutting blade to cut from the cutting start incision portion.

## Description

### BACKGROUND

### 1. Field

The present invention relates to an apparatus and method for cutting a secondary battery can.

### 2. Description of the Related Art

Secondary batteries are batteries that can be charged and discharged, unlike primary batteries that cannot be recharged. A secondary battery includes an electrode assembly composed of a positive electrode plate, a negative electrode plate, and a separator. The electrode assembly is accommodated and sealed in a battery can along with an electrolyte.

A process of manufacturing a battery generally includes an impact process of applying an impact to a slug or billet-shaped material to form substantially a cup shape, an ironing process of inserting a punch into the formed cup shape and pushing the punch into a die to make a sidewall even and thin, thereby improving a surface smoothly, and a cutting process of trimming a part of an opening of a molded product formed through the ironing process to obtain a battery can having a desired height specification.

A cutter is used in the cutting process. The cutter moves in front-rear and left-right directions while inserted into a portion of the molded product, which will be removed, to cut a removal target portion.

The above information disclosed in this background section is for enhancement of understanding of the background of the present invention, and therefore, it may contain information that does not constitute a related art.

### SUMMARY OF THE INVENTION

The present invention includes an apparatus for cutting a secondary battery can, the apparatus including a support fixedly supporting a molded battery can product having a removal target portion, a cutter having an incision blade inserted into the molded battery can product, the cutter being configured to incise a portion of the removal target portion, and a cutting blade configured to continuously cut from the portion of the removal target portion incised by the incision blade, and a cutter driver that moves the cutter and causes the incision blade to move along a linear path perpendicular to an inner wall of the molded battery can product, resulting in a cutting start incision portion on the inner wall, the cutter driver causing the cutting blade to cut from the cutting start incision portion.

The molded battery can product may have a first short edge and a second short edge facing each other, and a first long edge and a second long edge facing each other, the cutting blade of the cutter may include a first short edge cutting blade portion corresponding to the first short edge, a first long edge cutting blade portion corresponding to the first long edge, a second short edge cutting blade portion corresponding to the second short edge, and a second long edge cutting blade portion corresponding to the second long edge, and the incision blade is on the first short edge cutting blade portion.

The first short edge and the first short edge cutting blade portion, the first long edge and the first long edge cutting blade portion, the second short edge and the second short edge cutting blade portion, and the second long edge and the second long edge cutting blade portion can be non-parallel.

The incision blade may protrude from the first short edge cutting blade portion toward the first short edge and, when the cutter moves toward the first short edge, the incision blade reaches the first short edge earlier than the first short edge cutting blade portion and makes an incision.

The incision blade may be at a point that is 1/2 to 3/4 of a length of the first short edge cutting blade portion from one end portion of the first short edge cutting blade portion.

The incision blade and the cutting blade may be on a corner between an upper surface and a side surface of the cutter, and the side surface may have an acute angle with the upper surface.

An angle between the upper surface and a thickness surface may range from 77 to 87 degrees.

The second short edge cutting blade portion may have an angle of between 15 degrees and 25 degrees with the second short edge.

The first long edge cutting blade portion may have an angle of between 1 degree and 4 degrees with the first long edge.

The second long edge cutting blade portion has an angle of between 1 degree and 4 degrees with the second long edge.

The support may include a support plate on the cutter, the support plate having a quadrangular passage through which the removal target portion of the molded battery can product passes downward so that the removal target portion surrounds the cutter, and a height maintenance part that supports the molded battery can product to prevent the molded battery can product from falling down.

The height maintenance part may have a variable jig supported by an upper surface of the cutter while being accommodated inside the molded battery can product and upwardly supporting a bottom portion of the molded battery can product.

The variable jig may include a pair of jig blocks spaced apart from each other and in contact with the bottom portion and an inner surface of the molded battery can product, and an interval adjustment part to adjust an interval between the pair of jig blocks.

Screw holes on a straight line may be in facing surfaces of the pair of jig blocks, the screw holes facing each other, and a screw thread of a screw hole of the screw holes at one side is a right-handed screw thread and a screw thread of a screw hole of the screw holes at a facing side is a left-handed screw thread, and the interval adjustment part may include a bidirectional screw rod of which both end portions are screw-coupled to the screw holes of the pair of jig blocks at both sides, and a rotatable member fixed to the bidirectional screw rod, the rotatable member rotating by receiving an external force to axially rotate the bidirectional screw rod.

The support may further include a can pressing part downwardly supporting the molded battery can product supported by the variable jig.

The can pressing part may include a pair of support walls fixed to an upper portion of the support plate, the pair of support walls being fixed at opposite sides with the quadrangular passage interposed therebetween, a pressing block mounted between the pair of support walls, the pressing block pressing the molded battery can product, and a block fixing part maintaining a height of the pressing block.

Horizontal inner teeth may be on an inner surface of the support wall, and side teeth engageable with the horizontal inner teeth may be on both side surfaces of the pressing block.

Coupling screw holes may be in both side surfaces of the pressing block, a long vertical hole corresponding to a coupling screw hole of the coupling screw holes may be in each support wall, and the block fixing part may have a fixing screw coupled to the coupling screw hole through the long vertical hole.

The invention also concerns a method of cutting a secondary battery can, the method including fixing a molded battery can product having a first short edge and a second short edge facing each other, and a first long edge and a second long edge facing each other, and having a removal target portion removable through a trimming process, positioning a cutter inside the molded battery can product, the cutter having a first short edge cutting blade portion corresponding to the first short edge, a first long edge cutting blade portion corresponding to the first long edge, a second short edge cutting blade portion corresponding to the second short edge, a second long edge cutting blade portion corresponding to the second long edge, and an incision blade on the first short edge cutting blade portion, the incision blade protruding outward from the first short edge cutting blade portion, linearly moving the cutter so that the incision blade incises the first short edge, and moving the cutter along a curved path and starting to cut from an incised portion and cutting the removal target portion.

Linearly moving the cutter may include moving the incision blade portion along a linear path orthogonal to the first short edge so that the incision blade portion passes through the first short edge.

### BRIEF DESCRIPTION OF THE DRAWINGS

Features will become apparent to those of ordinary skill in the art by describing in detail exemplary embodiments with reference to the attached drawings, in which:
FIG. 1 is a perspective view of a prismatic battery having a battery can that is cut by a cutting apparatus according to an embodiment of the present invention;
FIG. 2 is a cross-sectional view of the prismatic battery illustrated in FIG. 1;
FIG. 3 is a view illustrating a molded product that has been primarily processed to manufacture a battery can;
FIG. 4 is a view illustrating a cut trimming line of FIG. 3;
FIGS. 5 to 7 are views for describing a cutting problem;
FIG. 8 is a perspective view illustrating both a cutter holder and a cutter applied to an apparatus for cutting a secondary battery can according to an embodiment of the present invention;
FIG. 9 is a plan view for describing the geometrical characteristics of the cutter illustrated in FIG. 8;
FIG. 10 is a side view of the cutter illustrated in FIG. 8;
FIGS. 11 to 24 are views sequentially illustrating a removal target portion that is trimmed using the cutter according to an embodiment of the present invention;
FIG. 25 is a configuration diagram illustrating the overall configuration of a cutting apparatus according to an embodiment of the present invention;
FIGS. 26 and 27 are views illustrating a removal target portion that is cut using a cutter.
FIG. 28 is a view separately illustrating a variable jig of FIG. 25;
FIG. 29 is a plan cross-sectional view of the variable jig of FIG. 28;
FIG. 30 is an exploded perspective view of a can pressing part illustrated in FIG. 25; and
FIG. 31 is a flowchart for describing a method of cutting a secondary battery can according to an embodiment of the present invention.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey exemplary implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

It will be understood that if an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, if a first element is described as being "coupled" or "connected" to a second element, the first element may be directly coupled or connected to the second element or the first element may be indirectly coupled or connected to the second element via one or more intervening elements.

As used herein, the term "and/or" includes any and all combinations of one or more of the associated listed items. Further, the use of "may" if describing embodiments of the present invention relates to "one or more embodiments of the present invention." Expressions, such as "at least one of" and "any one of," if preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present invention and is not intended to be limiting of the present invention. As used herein, the singular forms "a" and "an" are intended to include the plural forms as well, unless the context clearly indicates otherwise. It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all subranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the requirements of patent rules.

References to two compared elements, features, etc. as being "the same" may mean that they are "substantially the same." Thus, the phrase "substantially the same" may include a case having a deviation that is considered low in the art, for example, a deviation of 5% or less. In addition, if a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may contact the upper (or lower) surface of the element, and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

Throughout the specification, if "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terminology used herein is for the purpose of describing embodiments of the present invention and is not intended to limit the present invention.

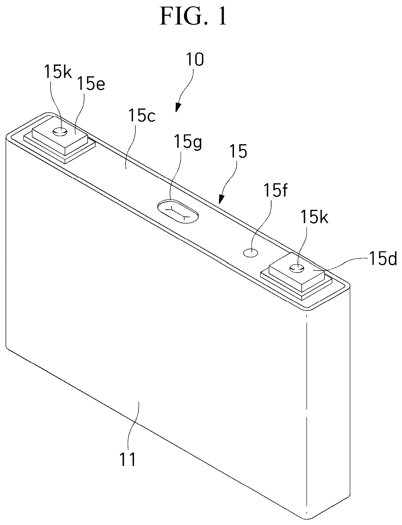

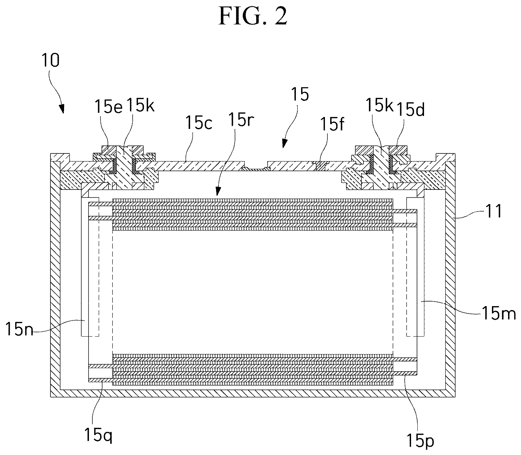

FIG. 1 is a perspective view of a prismatic battery 10 having a battery can 11 cut by a cutting apparatus according to an embodiment of the present invention, and FIG. 2 is a cross-sectional view of the prismatic battery illustrated in FIG. 1.

The battery can 11 may form the overall exterior of the prismatic battery and may be formed of a conductive metal, such as aluminum, an aluminum alloy, or nickel-plated steel. In addition, the battery can 11 may provide a space in which an electrode assembly is accommodated.

A cap assembly 15 may include a cap plate 15c that covers an opening of the battery can 11. In some embodiments, the battery can 11 and the cap plate 15c may be formed of a conductive material. The cap plate 15c may have a positive electrode terminal 15d, a negative electrode terminal 15e, a gas discharge hole 15g, and an injection port 15f.

Here, the positive electrode terminal 15d and the negative electrode terminal 15e may be electrically connected to positive and negative electrode tabs, respectively, inside the battery can 11 and installed so as to be exposed to the outside of the cap plate 15c. The injection port 15f is a passage through which an electrolyte is injected into the battery can. In addition, the gas discharge hole 15g is opened by gas generated inside the battery to degas the gas.

The electrode assembly 15r inside the battery can 11 may be formed by winding or stacking first electrode plates, separators, and second electrode plates formed in a plate shape or a film shape. If the electrode assembly 15r is a wound stack, a winding axis may be parallel to the longitudinal direction of the battery can 11. In some other embodiments, the electrode assembly 15r is a stack type rather than a winding type. The shape of the electrode assembly 15r may vary.

In addition, the electrode assembly 15r may be a Z-stack electrode assembly in which a positive electrode plate and a negative electrode plate are inserted into both sides of a separator, which is then bent into a Z-stack. In addition, one or more of the electrode assembly 15r may be stacked such that long sides of the electrode assemblies are adjacent to each other and accommodated in the case, and the number of electrode assemblies in the battery can 11 may vary. The first electrode plate of the electrode assembly 15r may act as a negative electrode, and the second electrode plate may act as a positive electrode. Of course, the reverse is also possible.

The first electrode plate may be formed by applying a first electrode active material, such as graphite, carbon, or the like, to a first electrode current collector formed of a metal foil, such as copper, a copper alloy, nickel, a nickel alloy, or the like. The first electrode plate may include a first electrode tab 15p (e.g., a first uncoated portion) that is a region to which the first electrode active material is not applied. The first electrode tab 15p may act as a current flow path between the first electrode plate and the first current collector 15m. In some embodiments, when the first electrode plate is manufactured, the first electrode tab 15p is formed by being cut in advance to protrude to one side of the electrode assembly, or the first electrode tab protrudes to one side of the electrode assembly more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab 15q (e.g., a second uncoated portion) that is a region to which the second electrode active material is not applied. The second electrode tab 15q may act as a current flow path between the second electrode plate and the second current collector 15n. In some embodiments, the second electrode tab 15q may be formed by being cut in advance to protrude to the other side (e.g., the opposite side) of the electrode assembly when the second electrode plate is manufactured, or the second electrode plate may protrude to the other side of the electrode assembly more than (e.g., farther than or beyond) the separator without being separately cut.

The separator prevents or substantially reduces instances of a short circuit between the first electrode and the second electrode while allowing movement of lithium ions therebetween. The separator may be made of, for example, a polyethylene film, a polypropylene film, a polyethylene-polypropylene film, or the like. In some embodiments, the electrode assembly 15r is accommodated in the battery can 11 along with an electrolyte.

In the electrode assembly 15r, the first current collector 15m and the second current collector 15n may be welded and connected to the first electrode tab 15p extending from the first electrode plate and the second electrode tab 15q extending from the second electrode plate, respectively.

The first current collector 15m and the second current collector 15n are connected to the positive electrode terminal 15d and the negative electrode terminal 15e through connection members 15k, respectively. In some embodiments, the connection members 15k may each have an outer peripheral surface that is threaded, and may be fastened to the positive electrode terminal 15d and the negative electrode terminal 15e by screwing. However, the connection members 15k may also be coupled to the positive electrode terminal 15d and the negative electrode terminal 15e by riveting or welding.

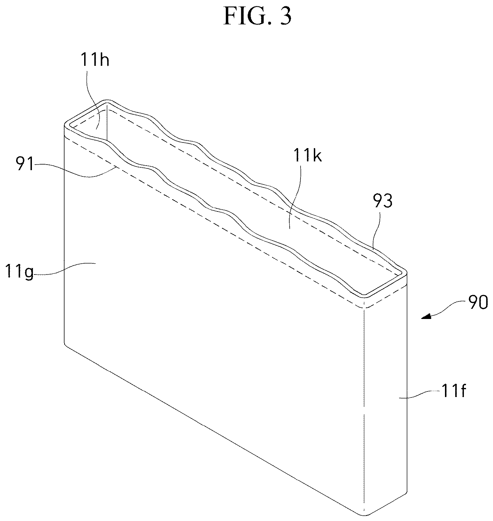

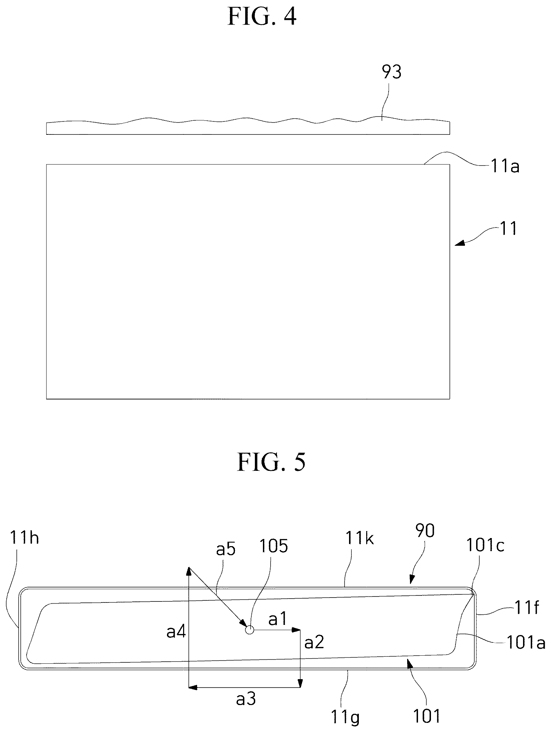

FIG. 3 is a view illustrating a molded battery can product 90 that has been processed to manufacture the battery can 11, and FIG. 4 is a view illustrating the trimming line 91 of FIG. 3. When the processing of a metal plate is completed, the molded battery can product 90 illustrated in FIG. 3 is completed.

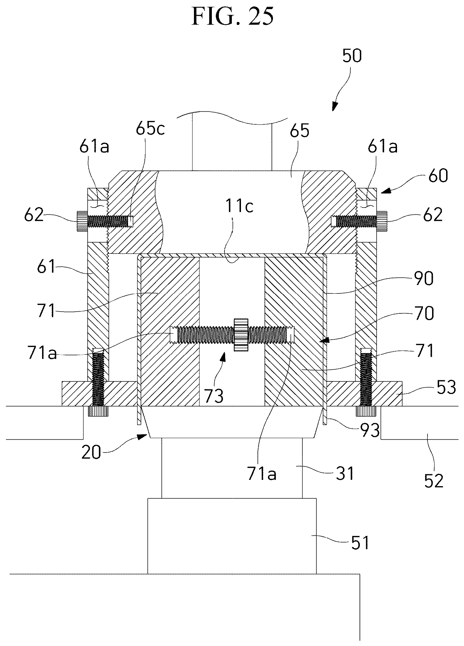

The molded battery can product 90 is a processing result from an ironing device. As illustrated in FIG. 3, an upper end portion of the molded battery can product 90 has an irregular shape. The battery can 11 can be obtained by cutting the upper end portion of the molded battery can product 90 having such an irregular upper end portion using a cutting apparatus 50 (see FIG. 25) according to the present embodiment.

In FIG. 3, the trimming line 91 is a cutting line, which will be cut by the cutting apparatus 50. An upper portion of the trimming line 91 is a removal target portion 93. When the removal target portion 93 is removed, the battery can 11 of FIG. 1 is formed. An opening 11a of the battery can 11 has a rectangular shape. In addition, a bottom portion 11c of the battery can 11 is flat.

In addition, the four sides of the battery can 11 include a first short edge 11f, a first long edge 11g, a second short edge 11h, and a second long edge 11k. The first short edge 11f and the second short edge 11h are parallel to each other, and the first long edge 11g and the second long edge 11k are also parallel to each other. By cutting the trimming line 91 using the cutting apparatus 50 of the present embodiment, an opening 11a that is smooth without any nicks or damage may be formed. Since there is no damage to the opening 11a, the connection of the cap assembly 15 to the battery can 11 is maintained well.

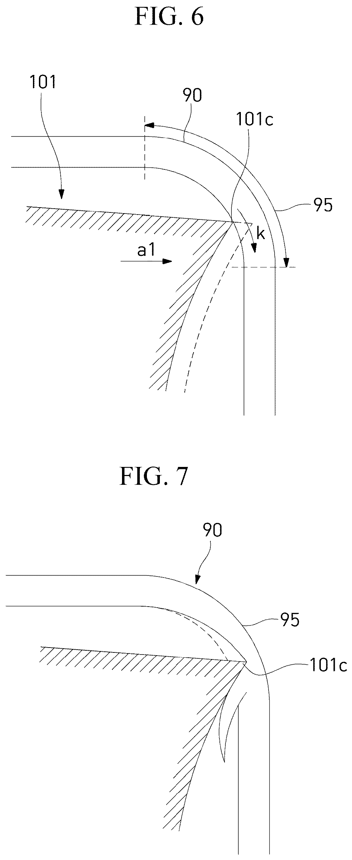

FIGS. 5 to 7 are views for describing a comparative cutting problem.

As illustrated, a cutter 101 is accommodated inside the molded battery can product 90. In the state of FIG. 5, the cutter 101 moves in a direction of arrow a1 to cut the first short edge 11f and moves in a direction of arrow a2 to cut the first long edge 11g. In addition, the cutter 101 moves in a direction of arrow a3 to cut the second short edge 11h and moves in a direction of arrow a4 to cut the second long edge 11k.

However, the cutter 101 has a cutting start portion 101c that protrudes to the right from an upper side of one end of the cutter. A right extension line of the cutting start portion 101c comes into contact with a corner 95 of the molded battery can product 90. The corner 95 has a curved shape between the second long edge 11k and the first short edge 11f.

Accordingly, when the cutter 101 moves in the direction of arrow a1, the cutting start portion 101c comes into contact with an inner surface of the corner 95 and slides slightly in a direction of arrow k, and thus the inner surface of the corner is torn. Such a "tearing phenomenon" may affect the battery can portion beyond the trimming line 91. This causes a defective battery can 11.

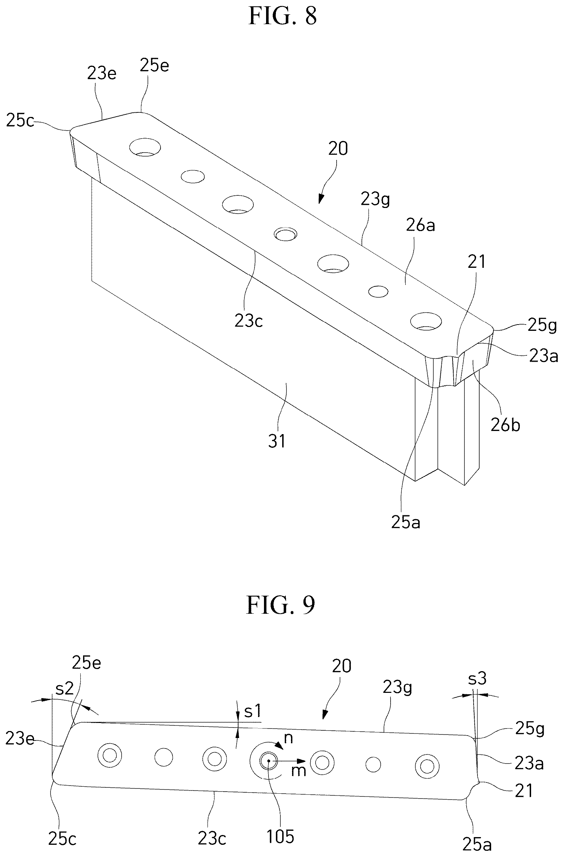

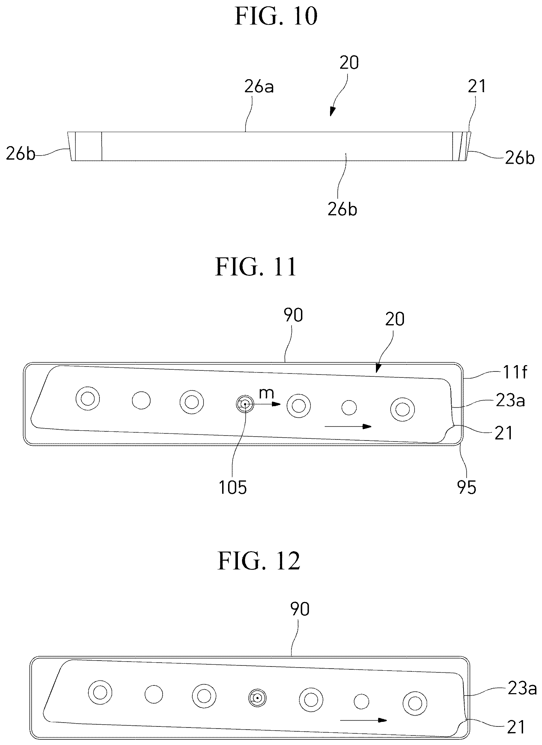

FIG. 8 is a perspective view illustrating both a cutter holder 31 and a cutter 20 applied to the cutting apparatus 50 for a secondary battery can according to an embodiment of the present invention, and FIG. 9 is a plan view for describing the geometrical characteristics of the cutter illustrated in FIG. 8. In addition, FIG. 10 is a side view of the cutter illustrated in FIG. 8.

As illustrated, the cutter 20 has a predetermined thickness and has a cutting blade and an incision blade 21 at an upper edge thereof. The cutting blade and the incision blade 21 are blades formed on a corner between an upper surface 26a and a side surface 26b of the cutter 20 and may cut the trimming line 91. The side surface 26b and the upper surface 26a have an acute angle therebetween. Preferably, the angle between the upper surface and the side surface may range from 77 to 87 degrees. The side surface 26b may be referred to as a thickness surface of the cutter 20.

The cutting blade may include a first short edge cutting blade portion 23a corresponding to (e.g., aligned with) the first short edge 11f of the molded battery can product, a first long edge cutting blade portion 23c corresponding to (e.g., aligned with) the first long edge 11g, a second short edge cutting blade portion 23e corresponding to (e.g., aligned with) the second short edge 11h, and a second long edge cutting blade portion 23g corresponding to (e.g., aligned with) the second long edge 11k.

The first short edge 11f and the first short edge cutting blade portion 23a, the first long edge 11g and the first long edge cutting blade portion 23c, the second short edge 11h and the second short edge cutting blade portion 23e, and the second long edge 11k and the second long edge cutting blade portion 23g are in a non-parallel state. That is, they are not parallel to each other.

In addition, the cutting blade may further include a first rounded blade portion 25a, a second rounded blade portion 25c, a third rounded blade portion 25e, and a fourth rounded blade portion 25g. The first rounded blade portion 25a is formed between the first short edge cutting blade portion 23a and the first long edge cutting blade portion 23c, the second rounded blade portion 25c is formed between the first long edge cutting blade portion 23c and the second short edge cutting blade portion 23e, the third rounded blade portion 25e is formed between the second short edge cutting blade portion 23e and the second long edge cutting blade portion 23g, and the fourth rounded blade portion 25g is formed between the second long edge cutting blade portion 23g and the first short edge cutting blade portion 23a.

A radius of curvature of the first rounded blade portion 25a may be about 3.5±1.5 mm, a radius of curvature of the second rounded blade portion 25c may be about 3±1.5 mm, a radius of curvature of the third rounded blade portion 25e may be about 5±1.5 mm, and a radius of curvature of the fourth rounded blade portion 25g may be about 3.5±1.5 mm. The radius of curvature of the rounded blade portion may vary according to the size or shape of the molded battery can product 90.

The first long edge cutting blade portion 23c and the second long edge cutting blade portion 23g are parallel to each other. An angle S1 (see FIG. 9) between the first long edge cutting blade portion 23c and the first long edge 11g may range from about 1 degree to about 4 degrees. Likewise, the second long edge cutting blade portion 23g may have an angle of about 1 degree to about 4 degrees with respect to the second long edge 11k.

In addition, an angle S2 between the second short edge cutting blade portion 23e and the second short edge 11h may range from 15 degrees to 25 degrees. In addition, an angle S3 between an upper portion of the incision blade 21 in the first short edge cutting blade portion 23a and the first short edge 11f may range from about 3 degrees to about 8 degrees.

The cutter 20 may be inserted into the molded battery can product 90 fixed to a support to be described below and may sequentially cut the trimming line 91 through linear motion in a direction of arrow m (see FIG. 9) and translational motion in a direction of arrow n. The translational motion is not a rotational motion that rotates around an origin 105 as the center of rotation, but a motion in which the cutter 20 itself rotates along the trajectory of the circle. After rotating once along the trajectory of the circle, the cutter 20 moves linearly in a direction opposite to the direction of arrow m and returns to an initial position.

Meanwhile, the incision blade 21 is formed on the first short edge cutting blade portion 23a. The incision blade 21 protrudes from the first short edge cutting blade portion 23a toward the first short edge 11f and, when the cutter moves toward the first short edge 11f, the incision blade 21 reaches the first short edge earlier than the first short edge cutting blade portion and makes an incision. A portion incised by the incision blade 21 is a cutting start point of the trimming line 91. The cutting is continuously performed from the portion incised by the incision blade. In particular, since the incision blade 21 pre-cuts the first short edge 11f, the molded battery can product 90 is not deformed during the cutting of the first short edge cutting blade portion 23a.

The incision blade 21 may be located at a point that is about 1/2 to 3/4 of a length of the first short edge cutting blade portion 23a from one end of the first short edge cutting blade portion 23a. That is, the incision blade 21 is located at a point that is about 1/2 to 3/4 from the point at which the incision blade 21 meets the fourth rounded blade portion 25g in a direction in which the first rounded blade portion 25a is located. The incision blade 21 may have a pointed shape pointing toward the first short edge 11f. Reference numeral 31 of FIG. 8 denotes a cutter holder. As illustrated in FIG. 25, the cutter holder 31 transmits the power of a cutter driving unit 51 to the cutter 20 while being supported by the cutter driving unit 51.

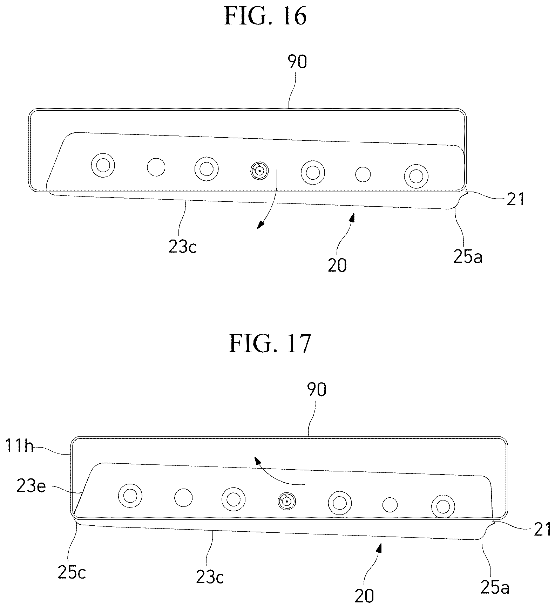

FIGS. 11 to 24 are views sequentially illustrating a removal target portion that is trimmed using the cutter according to an embodiment of the present invention.

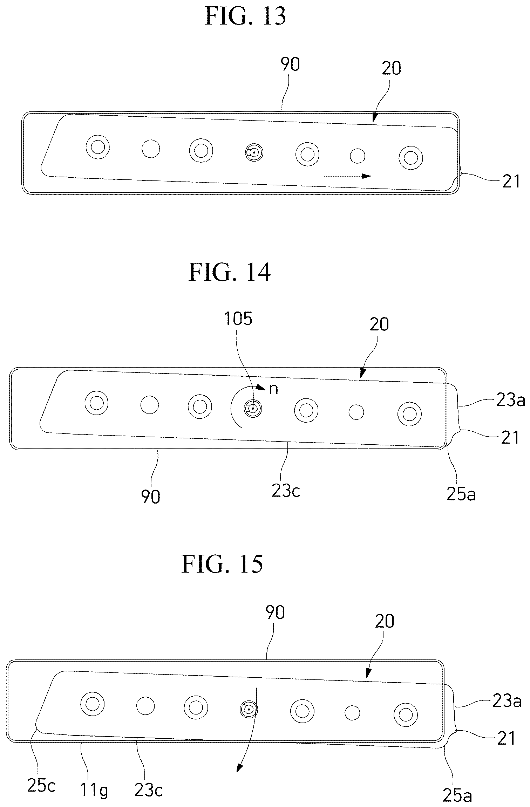

FIG. 11 illustrates a state before the cutter 20 moves. To perform trimming in this state, the cutter 20 moves linearly in the direction of arrow m. FIGS. 12 and 13 illustrate the cutter 20 moving toward the first short edge 11f. A movement path of the cutter 20 is perpendicular to the first short edge 11f. Accordingly, the slipping phenomenon of the incision blade 21 with respect to the first short edge 11f does not occur.

As the cutter 20 moves in the direction of arrow m (a right direction in the drawing), the incision blade 21 cuts the first short edge 11f and then passes through the first short edge 11f. In addition, the first short edge cutting blade portion 23a performs cutting on the first short edge 11f from the portion incised by the incision blade 21. In addition, the first rounded blade portion 25a of the cutter cuts a corner between the first short edge and the first long edge.

FIG. 14 illustrates the cutter 20 that has completely moved to the right. The cutter 20 rotates from the state of FIG. 14 in the direction of arrow n. As described above, when the cutter 20 rotates in the direction of arrow n, it does not mean rotating with the origin 105 as the rotation axis, such as a propeller, but means performing translational movement. The cutter 20 moves horizontally and vertically while maintaining the angle of FIG. 14. The cutter 20 may, for example, move to the left while moving downward, or move to the right while moving upward.

Subsequently, the cutter 20 moves to the left while moving downward as illustrated in FIGS. 15 to 17. That is, the cutter 20 cuts the first long edge 11g and moves toward the second short edge 11h. As the cutter 20 moves toward the second short edge 11h, the second rounded blade portion 25c may cut a lower left corner of the molded battery can product 90.

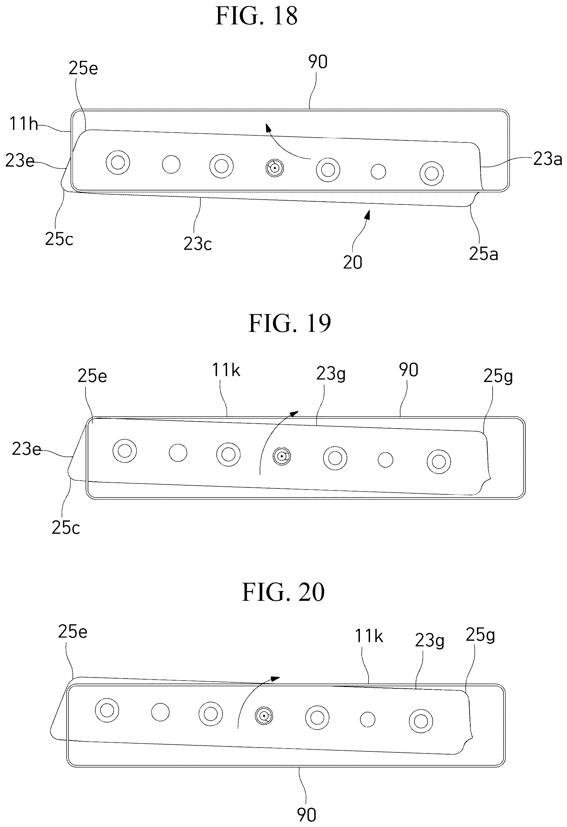

In addition, the cutter starts to move upward while moving completely to the left as illustrated in FIGS. 18 and 19. Accordingly, the second short edge 11h is completely cut by the second short edge cutting blade portion 23e. In this case, as illustrated in FIG. 19, an upper left corner of the molded battery can product may be cut by the third rounded blade portion 25e.

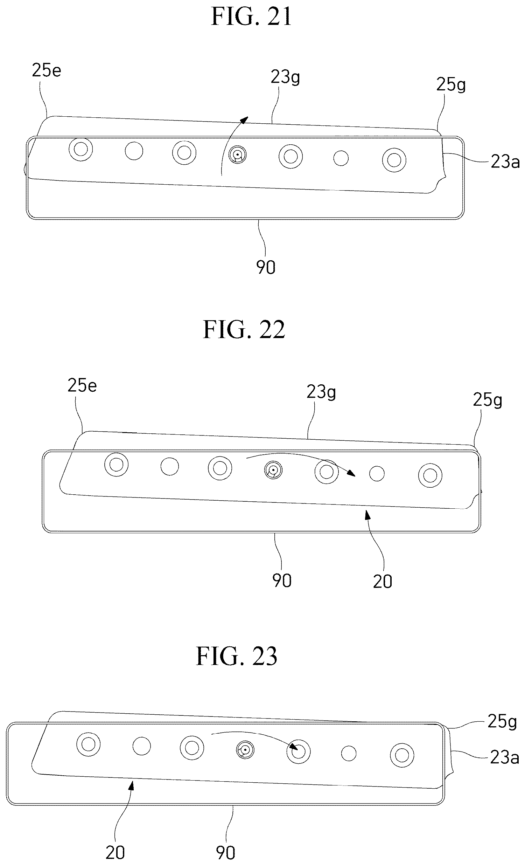

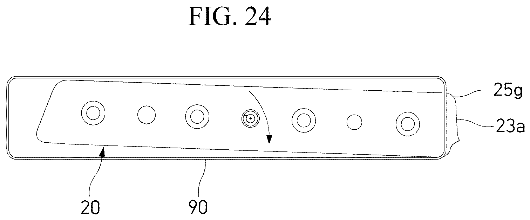

FIGS. 20 to 22 illustrate the cutter 20 moving to the right while moving upward. As illustrated, the second long edge cutting blade portion 23g of the cutter 20 moves to the right while cutting the second long edge 11k. The fourth rounded blade portion 25g of the cutter 20 moves to the right while cutting an upper right corner of the molded battery can product 90. FIG. 23 illustrates a corner being cut by the fourth rounded blade portion 25g. In addition, the cutter 20 moves downward while moving to the right to cut an uncut portion of the first short edge 11f. The cutter 20 returns to an initial position, that is, the position of FIG. 11, from the state of FIG. 24.

Such movement of the cutter 20 can be achieved by the cutter driving unit 51 (see FIG. 25). The cutter driving unit 51 may have a gear, an eccentric shaft, etc. therein. The cutter driving unit 51 moves the cutter 20 and causes the incision blade 21 of the cutter to move along a linear path perpendicular to an inner wall of the molded battery can product to form a cutting start incision portion on the inner wall, and then causes the cutting blade to perform cutting from the cutting start incision portion.

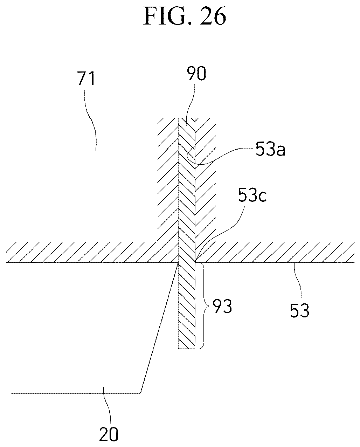

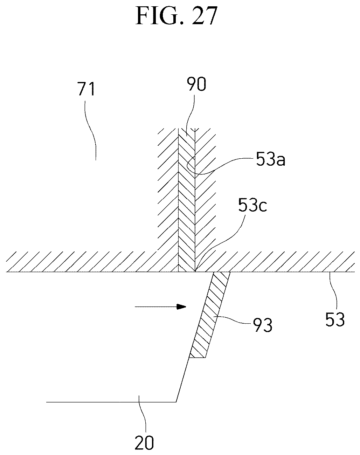

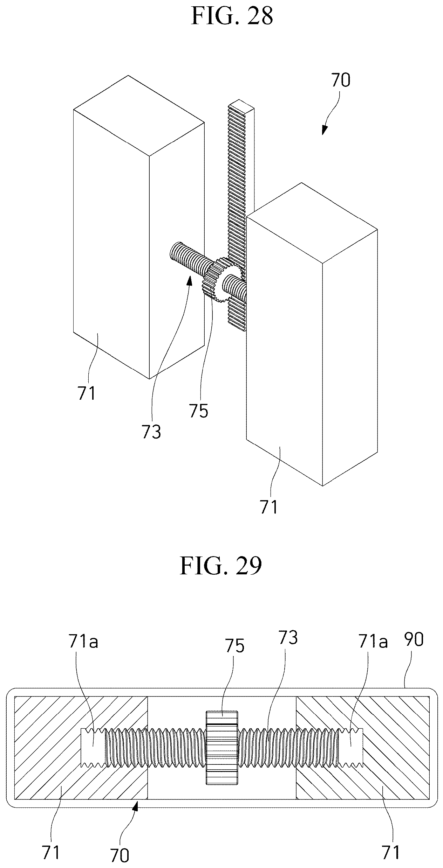

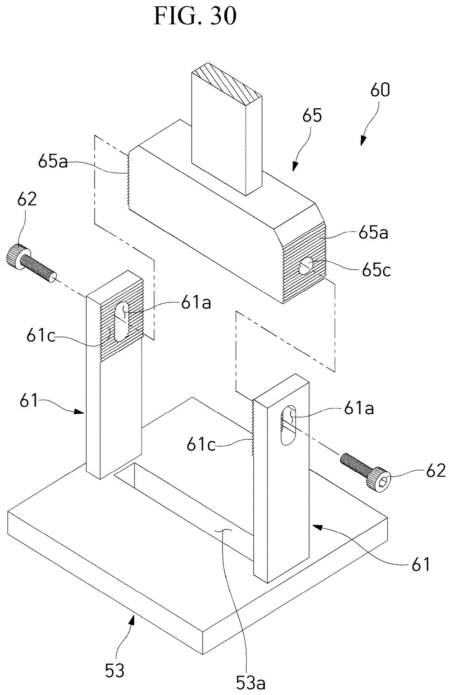

FIG. 25 is a configuration diagram illustrating the overall configuration of the cutting apparatus 50 according to an embodiment of the present invention, and FIGS. 26 and 27 are views illustrating the removal target portion 93 that is cut using a cutter. In addition, FIG. 28 is a view separately illustrating a variable jig of FIG. 25, and FIG. 29 is a plan cross-sectional view of the variable jig of FIG. 28. In addition, FIG. 30 is an exploded perspective view of a can pressing part illustrated in FIG. 25.

As illustrated, the cutting apparatus 50 according to the present embodiment may include the support, the cutter 20, the cutter holder 31, and the cutter driving unit 51.

The support serves to support the molded battery can product 90 in an upright state. That is, the support fixes the molded battery can product 90 so that its opening faces downward. The removal target portion 93 to be removed from the molded battery can product 90 may be exposed downward from a support plate 53. The support may include the support plate 53, a height maintenance part, and a can pressing part 60. In addition, the height maintenance part may include a variable jig 70.

The support plate 53 is a plate-shaped member fixed at a higher position than (e.g., above) the cutter 20 and supported horizontally by a support structure 52. As illustrated in FIG. 30, the support plate 53 has a quadrangular passage 53a in a rectangular shape at a central portion thereof. The quadrangular passage 53a allows a part of the molded battery can product 90 to pass therethrough so that the trimming line 91 is located on a flat surface including a bottom surface of the support plate 53.

A lower corner of the quadrangular passage 53a is a support blade portion 53c. The support blade portion 53c serves to enable shearing of the molded battery can product 90 through cross motion with the cutting blade of the cutter 20. In addition, an outer surface of the molded battery can product 90 may come into surface contact with an inner surface of the quadrangular passage 53a.

In addition, the removal target portion 93 protruding downward from the quadrangular passage 53a surrounds the cutter 20. The removal target portion 93 may be cut as the cutter 20 moves in front-rear and left-right directions while maintaining horizontality.

The height maintenance part supports the molded battery can product 90, thereby preventing the molded battery can product 90 from falling down. The trimming line 91 may be maintained at the same height as the bottom surface of the support plate 53 by the height maintenance part. The height maintenance part may also serve to fix the molded battery can product 90. That is, the height maintenance part prevents the molded battery can product 90 from moving during cutting.

In the present embodiment, the height maintenance part is a variable jig 70. The variable jig 70 is supported on the upper surface of the cutter 20 while accommodated inside the molded battery can product 90 and upwardly supports the bottom portion 11c of the molded battery can product. The variable jig 70 may slide on the upper surface of the cutter 20.

The variable jig 70 may include a pair of jig blocks 71 and an interval adjustment part. The pair of jig blocks 71 are hexahedral members that are spaced apart from each other and come into contact with the bottom portion and the inner surface of the molded battery can product. In addition, a female screw hole 71a (e.g., screw hole) may be formed in the variable jig 70. The female screw hole 71a is a screw hole formed in facing surfaces of the pair of jig blocks 71. Both of the female screw hole 71a are located on a straight line and have opposite spirals. That is, a screw thread of a female screw hole at one side is a right-handed screw thread (e.g., a screw thread on the right in the orientation shown), and a screw thread of a female screw hole at a facing side is a left-handed screw thread (e.g., a screw thread on the left side in the orientation shown).

The interval adjustment part serves to adjust an interval between the pair of jig blocks 71. The interval adjustment part may include a bidirectional screw rod 73 and a rotatable member 75. The bidirectional screw rod 73 is a member of which both end portions are screw-coupled to each of the female screw hole 71a of the pair of jig blocks at both sides. In addition, the rotatable member 75 is a gear-shaped member fixed to the bidirectional screw rod 73. The rotatable member 75 may rotate by receiving an external force to axially rotate the bidirectional screw rod 73. The interval between the pair of jig blocks 71 is adjusted according to the axial rotation of the bidirectional screw rod 73. FIG. 25 illustrates the pair of jig blocks 71 (that are bidirectional) in a state of being spread apart from each other as much as possible. The pair of jig blocks 71 press the molded battery can product 90 to the inner surface of the quadrangular passage 53a while spaced apart from each other as much as possible. As a result, the molded battery can product 90 can be stably fixed by being caught between the pair of jig blocks 71 and the support plate 53.

Meanwhile, the can pressing part 60 may downwardly support the molded battery can product 90 supported by the variable jig 70. The can pressing part 60 may have the configuration illustrated in FIG. 30.

As illustrated, the can pressing part 60 may include a pair of support walls 61, a pressing block 65, and a block fixing part.

The pair of support walls 61 are members that are fixed to the upper portion of the support plate 53 and are vertically fixed opposite to each other with the quadrangular passage 53a interposed therebetween. Inner teeth 61c may be formed on an upper inner surface of each of the pair of support walls 61. The inner teeth 61c are horizontally formed teeth and may engage with side teeth 65a formed on both end portions of the pressing block 65. In addition, a long vertical hole 61a corresponding to a coupling screw hole 65c is located in each support wall. The long vertical hole 61a is a hole through which a fixing screw 62, which is a block fixing part, passes.

The pressing block 65 is a substantially hexahedral member and has the side teeth 65a on both side surfaces thereof. The side teeth 65a are teeth that may engage with the inner teeth 61c. In addition, a coupling screw hole 65c is formed in an inner area of the side teeth 65a. The coupling screw hole 65c is a female screw hole to which the fixing screw 62 is coupled. The pressing block 65 comes into contact with the molded battery can product 90 while mounted between the pair of support walls 61 to downwardly support the molded battery can product. Since the pressing block 65 presses and supports the molded battery can product 90, the molded battery can product 90 does not shake during cutting.

The fixing screw 62 is a block fixing part that adjusts a height of the pressing block 65. When the fixing screw 62 is mounted in a state in which the height of the pressing block 65 is set, the fixing of the pressing block 65 may be maintained.

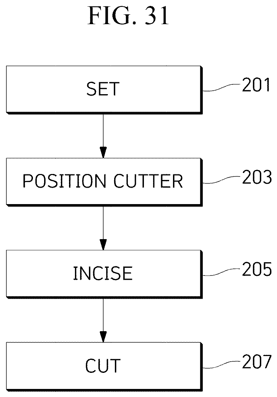

FIG. 31 is a flowchart for describing a method of cutting a secondary battery can according to an embodiment of the present invention.

A method of cutting a secondary battery can according to the present embodiment of the invention is a process of cutting (e.g., cutting at) the trimming line 91 of the molded battery can product 90 using the cutting apparatus 50.

The method of cutting a secondary battery can may include a molded battery can product setting operation 201, a cutter positioning operation 203, an incising operation 205, and a cutting operation 207.

The molded battery can product setting operation 201 is a process of fixing a prepared molded battery can product 90. That is, the molded battery can product setting operation 201 includes making the molded battery can product 90 upright in a state in which the variable jig 70 is mounted inside the molded battery can product 90 so that the removal target portion 93 protrudes downward from the support plate 53, and also downwardly supporting the molded battery can product 90 using the pressing block 65.

The cutter positioning operation 203 is a process of positioning the cutter 20 in an inner space of the molded battery can product 90. The cutter positioning operation 203 may be a process of aligning the origin 105 (see FIG. 5) of the cutter 20 with the center point of the quadrangle formed by the removal target portion 93 of the molded battery can product 90.

The incising operation 205 is a process of linearly moving the cutter 20 so that the incision blade 21 incises the first short edge 11f. That is, the incising operation 205 includes moving the cutter 20 in the direction of arrow m of FIG. 11 so that the incised end portion forms an incised portion in the first short edge 11f. That is, the incising operation 205 may be a process of moving the incision blade 21 along a linear path orthogonal to the first short edge so that the incision blade passes through the first short edge 11f. When the incised portion is first formed, the subsequent shearing process can be made much easier.

The cutting operation 207 (subsequent) is a process of moving the cutter 20 along a curved path and starting to cut from the incised portion and cutting the removal target portion. That is, the cutting operation 207 is a process of rotating the cutter 20 in the direction of arrow n (see FIG. 14) in a translational manner so that the cutter 20 cuts the trimming line 91.

Conventional cutting devices have a problem that a nick occurs during cutting. This is because a slight slipping phenomenon of the cutter occurs with respect to the molded product at the moment of cutting.

Since an apparatus for cutting a secondary battery can of the present invention has a structure optimized for cutting a prismatic battery can, there is no defect, such as a nick or the like, and thus a good cut surface can be formed.

In addition, since a molded product can be set quickly and easily and the molded product can be stably fixed during cutting, work productivity is good.

## Claims

1. An apparatus (50) for cutting a secondary battery can, the apparatus (50) comprising:
a support fixedly supporting a molded battery can product (90) having a removal target portion (93);
a cutter (20) having an incision blade (21) inserted into the molded battery can product (90), the cutter (20) being configured to incise a portion of the removal target portion (93), and a cutting blade configured to continuously cut from the portion of the removal target portion (93) incised by the incision blade (21); and
a cutter driver that moves the cutter (20) and causes the incision blade (21) to move along a linear path perpendicular to an inner wall of the molded battery can product (90), resulting in a cutting start incision portion on the inner wall, the cutter driver causing the cutting blade to cut from the cutting start incision portion.

2. The apparatus (50) as claimed in claim 1, wherein:
the molded battery can product (90) has a first short edge (11f) and a second short edge (11h) facing each other, and a first long edge (11g) and a second long edge (11k) facing each other,
the cutting blade of the cutter (20) comprises a first short edge cutting blade portion (23a) corresponding to the first short edge (11f), a first long edge cutting blade portion (23c) corresponding to the first long edge (11g), a second short edge cutting blade portion (23e) corresponding to the second short edge (11h), and a second long edge cutting blade portion (23g) corresponding to the second long edge (11k), and
the incision blade (21) is on the first short edge cutting blade portion (23a).

3. The apparatus (50) as claimed in claim 2, wherein the first short edge (11f) and the first short edge cutting blade portion (23a), the first long edge (11g) and the first long edge cutting blade portion (23c), the second short edge (11h) and the second short edge cutting blade portion (23e), and the second long edge (11k) and the second long edge cutting blade portion (23g) are non-parallel.

4. The apparatus (50) as claimed in claim 2 or 3, wherein the incision blade (21) protrudes from the first short edge cutting blade portion (23a) toward the first short edge (11f) and, when the cutter (20) moves toward the first short edge (11f), the incision blade (21) reaches the first short edge (11f) earlier than the first short edge cutting blade portion (23a) and makes an incision.

5. The apparatus (50) as claimed in any of claims 1 to 4, wherein:
the incision blade (21) and the cutting blade are on a corner between an upper surface (26a) and a side surface (26b) of the cutter (20), and
the side surface (26b) has an acute angle with the upper surface (26a).

6. The apparatus (50) as claimed in any of claims 2 to 4, wherein the second short edge cutting blade portion (23e) has an angle of between 15 degrees and 25 degrees with the second short edge (11h).

7. The apparatus (50) as claimed in any of claims 2 to 4 or 6, wherein
the first long edge cutting blade portion (23c) has an angle of between 1 degree and 4 degrees with the first long edge (11g), and
the second long edge cutting blade portion (23g) has an angle of between 1 degree and 4 degrees with the second long edge (11k).

8. The apparatus (50) as claimed in any of claims 1 to 7, wherein the support comprises:
a support plate (53) on the cutter (20), the support plate (53) having a quadrangular passage (53a) through which the removal target portion (93) of the molded battery can product (90) passes downward so that the removal target portion (93) surrounds the cutter (20); and
a height maintenance part that supports the molded battery can product (90) to prevent the molded battery can product (90) from falling down.

9. The apparatus (50) as claimed in claim 8, wherein the height maintenance part has a variable jig (70) supported by an upper surface of the cutter (20) while being accommodated inside the molded battery can product (90) and upwardly supporting a bottom portion (11c) of the molded battery can product (90).

10. The apparatus (50) as claimed in claim 9, wherein the variable jig (70) comprises:
a pair of jig blocks (71) spaced apart from each other and in contact with the bottom portion (11c) and an inner surface of the molded battery can product (90); and
an interval adjustment part to adjust an interval between the pair of jig blocks (71).

11. The apparatus (50) as claimed in claim 9 or 10, wherein the support further comprises a can pressing part (60) downwardly supporting the molded battery can product (90) supported by the variable jig (70).

12. The apparatus (50) as claimed in claim 11, wherein the can pressing part (60) comprises:
a pair of support walls (61) fixed to an upper portion of the support plate (53), the pair of support walls (61) being fixed at opposite sides with the quadrangular passage (53a) interposed therebetween;
a pressing block (65) mounted between the pair of support walls (61), the pressing block (65) pressing the molded battery can product (90); and
a block fixing part maintaining a height of the pressing block (65).

13. The apparatus (50) as claimed in claim 12, wherein:
horizontal inner teeth (61c) are on an inner surface of the support wall (61), and
side teeth (65a) engageable with the horizontal inner teeth (61c) are on both side surfaces of the pressing block (65).

14. A method of cutting a secondary battery can, the method comprising:
fixing a molded battery can product (90) having a first short edge (11f) and a second short edge (11h) facing each other, and a first long edge (11g) and a second long edge (11k) facing each other, and having a removal target portion (93) removable through a trimming process;
positioning a cutter (20) inside the molded battery can product (90), the cutter (20) having a first short edge cutting blade portion (23a) corresponding to the first short edge (11f), a first long edge cutting blade portion (23c) corresponding to the first long edge (11g), a second short edge cutting blade portion (23e) corresponding to the second short edge (11h), a second long edge cutting blade portion (23g) corresponding to the second long edge (11k), and an incision blade (21) on the first short edge cutting blade portion (23a), the incision blade (21) protruding outward from the first short edge cutting blade portion (23a);
linearly moving the cutter (20) so that the incision blade (21) incises the first short edge (11f); and
moving the cutter (20) along a curved path and starting to cut from an incised portion and cutting the removal target portion (93).

15. The method as claimed in claim 14, wherein linearly moving the cutter (20) includes moving an incision blade portion along a linear path orthogonal to the first short edge (11f) so that the incision blade portion passes through the first short edge (11f).
